(19) Europäisches Patentamt
European Patent Office
Office européen des brevets

(11) Veröffentlichungsnummer: **0 019 152**
**B1**

(12) # EUROPÄISCHE PATENTSCHRIFT

(45) Veröffentlichungstag der Patentschrift: **16.09.81**

(51) Int. Cl.³: **C 09 B 45/06**, C 09 B 45/10

(21) Anmeldenummer: **80102366.4**

(22) Anmeldetag: **02.05.80**

(54) **Verfahren zur Herstellung von Kobalt- und Chrom-1:2-Komplexfarbstoffen.**

(30) Priorität: **09.05.79 DE 2918634**

(43) Veröffentlichungstag der Anmeldung: **26.11.80 Patentblatt 80/24**

(45) Bekanntmachung des Hinweises auf die Patenterteilung: **16.09.81 Patentblatt 81/37**

(84) Benannte Vertragsstaaten: **CH DE FR GB IT LI**

(56) Entgegenhaltungen:
**DE-A-1 444 563**
**DE-A1-2 633 154**
**DE-B2-2 031 134**
**FR-A1-2 340 970**
**PATENT ABSTRACTS OF JAPAN, unexamined applications, C section, Vol. 1, No. 102, September 10, 1977. THE PATENT OFFICE JAPANESE COVERNMENT, page 2253 C77**

(73) Patentinhaber: **BASF Aktiengesellschaft, Carl-Bosch-Strasse 38, D-6700 Ludwigshafen (DE)**

(72) Erfinder: **Schaffner, Ernst, Dr., Lorscher Ring 16b, D-6710 Frankenthal (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG.

# Verfahren zur Herstellung von Kobalt- und Chrom-1:2-Komplexfarbstoffen

Die Erfindung betrifft ein Verfahren zur Herstellung von Kobalt- und Chrom-1:2-Metallkomplexen von Azofarbstoffen durch Diazotierung, Kupplung und Metallisierung, das dadurch gekennzeichnet ist, dass man Diazotierung, Kupplung und Metallisierung ohne Zwischenisolierungen in einem Gemisch aus Wasser und einem Lösungsmittel der Formel I

$$HO-X_n-B \qquad I,$$

in der

X einen Rest der Formel $-C_2H_4O-$, $-\underset{CH_3}{\underset{|}{C}}HCH_2O-$ oder $-CH_2\underset{CH_3}{\underset{|}{C}}HO-$,

n 1, 2 oder 3 und

B $C_1$- bis $C_4$-Alkyl bedeuten, ggf. im Gemisch mit weiteren Lösungsmitteln vornimmt, wobei die Mengenverhältnisse so gewählt werden, dass nach Ablauf aller Reaktionen bezogen auf das Gesamtgewicht die Reaktionsmischung 10 bis 30% Metallkomplexfarbstoff berechnet als Salz, 10 bis 20% Lösungsmittel, 30 bis 60% Wasser und 2 bis 20% reaktionsbedingte Salze enthält.

Einzelne Lösungsmittel der Formel I sind beispielsweise die Monomethyl-, -äthyl-, -propyl- oder -butyläther vom Mono-, Di- oder Triäthylen- oder -propylenglykol sowie Gemische davon. Bevorzugt sind Äthyl- und Butylglykol sowie Butyldiglykol. Im Gemisch mit diesen Lösungsmitteln sind auch andere wassermischbare Lösungsmittel wie Dimethylformamid, Dimethylacetamid, N-Methylpyrrolidon oder γ-Butyrolacton in Mengen bis zu 40% des Lösungsmittels der Formel I verwendbar.

Das Verfahren wird zweckmässigerweise so durchgeführt, dass man in einem Gemisch aus Wasser und einem Lösungsmittel der Formel I die Diazokomponente löst oder aufschlämmt und nach bekannten Methoden, vorzugsweise mit $NaNO_2$, diazotiert. Nach der Zugabe der Kupplungskomponenten lässt man auskuppeln und überführt den erhaltenen Azofarbstoff dann in den Metallkomplex. Zur Herstellung von Mischkomplexen kann man Diazotierung und Kupplung für die Einzelfarbstoffe in getrennten Ansätzen vornehmen und nach der Vereinigung die gemeinsame Metallisierung durchführen.

Zur Einstellung des Kupplungs-pH-Wertes verwendet man zweckmässigerweise Alkalihydroxide, -formiate, -acetate oder -propionate, Ammoniak oder aliphatische Amine. Bevorzugt sind Natronlauge, Natriumacetat und Alkanolamine, beispielsweise Äthanol- oder Methyläthanolamin.

Die Überführung in die Chrom- oder Kobalt-1:2-Metallkomplexe wird zweckmässigerweise im schwach sauren, bei den Kobaltkomplexen auch schwach alkalischen Medium vorgenommen. Metallisierungsmittel sind vorzugsweise die Metallhydroxide, d.h. $Cr(OH)_3$ oder $Co(OH)_2$, die vorzugsweise in Gegenwart von Alkansäuren und deren Alkali-, Ammonium- oder Aminsalzen eingesetzt werden. Dabei sind die vorstehend genannten Basen zur Salzbildung besonders geeignet.

Nach der Diazotierung und Kupplung liegt das Reaktionsgemisch in der Regel als Suspension vor, in der der Azofarbstoff fein verteilt ist. Bei der Metallisierung geht der Farbstoff allmählich in Lösung und nach der vollständigen Umsetzung liegt im allgemeinen ein Zweiphasensystem vor, wobei Farbstoff und Lösungsmittel die untere Phase bilden. In einigen Fällen kann der Farbstoff auch nach der Metallisierung auskristallisieren, insbesondere wenn man Methyl- oder Äthylglykol als Lösungsmittel verwendet.

Im Fall der Phasentrennung erhält man hochkonzentrierte, salzarme Metallkomplex-Farbstofflösungen oder Suspensionen, die vorteilhaft zur Bereitung von Farbstoffpräparationen, Farbstoffflüssigeinstellungen oder Pulverfarbstoffen (durch Sprühtrocknung oder Wirbelbetttrocknung) verwendet werden können.

Das erfindungsgemässe Verfahren wird bezüglich der Mengenverhältnisse zweckmässigerweise so durchgeführt, dass die Reaktionsmischungen am Ende der Umsetzung 10 bis 30%, vorzugsweise 15 bis 25% Farbstoff berechnet als Salz, 10 bis 20%, vorzugsweise 12 bis 18% Lösungsmittel und 30 bis 60%, vorzugsweise 40 bis 55% Wasser enthalten. Daneben sind im Reaktionsgemisch noch ungefähr 5 bis 20% Salze enthalten, die von den Ausgangsmaterialien stammen.

Wenn bei der erfindungsgemässen Arbeitsweise nach der Phasentrennung Farbstofflösungen erhalten werden, so weisen diese in der Regel folgende Zusammensetzung auf:

30 bis 50%, vorzugsweise 35 bis 45% Farbstoff,
15 bis 35%, vorzugsweise 20 bis 30% Lösungsmittel und
15 bis 40%, vorzugsweise 20 bis 35% Wasser.

Einzelheiten der Reaktionsführung können den Beispielen entnommen werden, in denen sich Angaben über Teile und Prozente, sofern nicht anders vermerkt, auf das Gewicht beziehen.

Vorteile des erfindungsgemässen Verfahrens bestehen darin, dass gegenüber der herkömmlichen Verfahrensweise in Wasser durch die Verwendung der beanspruchten Lösungsmittel bei der Diazotierung, Kupplung und Metallisierung eine Lösung oder zumindest eine hervorragende Durchmischung der Reaktionspartner zustandekommt, wesentlich konzentrierter gearbeitet werden kann und Zwischenstufen nicht isoliert werden müssen. Als Ergebnis sind im allgemeinen hohe Farbstoffausbeuten erzielbar, ohne dass Farbton und Reinheit der Farbstoffe beeinträchtigt werden.

Bei Farbstoffen, die nach herkömmlicher Verfahrensweise nur durch Zusatz erheblicher Mengen Salze, d.h. durch Aussalzen z.B. mit NaCl oder KCl bei entsprechender Umweltbelastung isoliert werden können, gestattet das erfindungsgemässe Verfahren die Herstellung dieser Farbstoffe ohne zusätzlichen Salzballast.

Co- und Cr-1:2-Komplexfarbstoffe, die nach dem erfindungsgemässen Verfahren hergestellt werden können, sind aus vielen Patentschriften bekannt, beispielsweise aus der DE-OS 24 04 314 und den dort zitierten Literaturstellen.

Beispiel 1

111,8 Teile 1-Amino-2-hydroxy-5-chlor-benzol-(3)sulfonsäure werden bei 0 bis 5 °C in einer Mischung aus 320 Teilen Wasser, 180 Teilen Butyldiglykol und 30 Teilen Essigsäure mit 170,5 Teilen 20,3%iger wässriger $NaNO_2$-Lösung diazotiert. Überschüssiges Nitrit wird nach 2 Stunden mit wenig Aminosulfonsäure zerstört. Dann werden 89 Teile Acetessigsäureanilid eingetragen und 40 Teile einer 50%igen wässrigen Natronlauge zugetropft. Die Kupplung ist nach 10 bis 15 Stunden beendet. Anschliessend werden weitere 15 Teile 50%ige Natronlauge sowie 74,5 Teile einer wässrigen Paste von $Co(OH)_2$ mit einem Gehalt an Co von 24,4% zugesetzt, und die Mischung wird 2 bis 3 Stunden auf 75 bis 80 °C erwärmt. Die beiden sich bildenden Phasen werden bei 30 bis 35 °C getrennt. Die untere Phase, 600 Teile eines viskosen Harzes, enthält den Farbstoff und wird von der schwach gefärbten wässrigen Phase getrennt.

Durch Verdünnen des Farbharzes, beispielsweise mit 100 Teilen Butyldiglykol, 100 Teilen Dimethylformamid und 100 Teilen Wasser erhält man eine beständige Farbstofflösung; diese färbt Wolle und Polyamid in goldgelben Tönen.

Arbeitet man wie in Beispiel 1, verwendet aber anstelle von 180 Teilen Butyldiglykol 100 Teile Äthylglykol, so fällt der Farbstoff am Ende kristallin aus und kann abgesaugt werden.

Beispiel 2

111,8 Teile 1-Amino-2-hydroxy-5-chlor-benzol-(3)sulfonsäure werden in 360 Teilen Wasser, 140 Teilen Äthylglykol und 30 Teilen Essigsäure mit 170,5 Teilen 20,3%iger wässriger $NaNO_2$-Lösung bei 0 bis 5 °C diazotiert. Überschüssiges Nitrit wird nach 2 Stunden mit wenig Aminosulfonsäure zerstört. Man versetzt dann mit 100 Teilen Acetessigsäurebenzylamid und lässt 40 Teile einer 50%igen wässrigen Natronlauge zulaufen. Die Kupplung ist nach 10 bis 15 Stunden beendet. Nun trägt man 20 Teile Na-acetat und 67 Teile einer wässrigen Paste von $Co(OH)_2$ mit einem Gehalt an Co von 24,4% ein und erhitzt 4 bis 5 Stunden auf 70 °C, wobei allmählich noch 16 Teile einer 50%igen Natronlauge zugetropft werden. Die sich bildenden zwei Phasen werden bei Raumtemperatur getrennt. Die untere Phase, 400 Teile, enthält den Farbstoff und wird eingedampft. Man erhält so 250 Teile trockenen Farbstoff, der Wolle und Polyamid goldgelb färbt.

Beispiel 3

117 Teile 1-Amino-2-hydroxy-5-nitro-benzol-(3)-sulfonsäure werden in einer Mischung aus 140 Teilen Butyldiglykol, 210 Teilen Wasser und 60 Teilen Essigsäure bei 0 bis 5 °C mit 170 Teilen einer 20,3%igen wässrigen $NaNO_2$-Lösung diazotiert. Dann werden 35 Teile β-Naphthol, 60 Teile [7-Hydroxy-naphthyl-(1)]-carbamidsäuremethylester und 75 Teile Mono-Methyläthanolamin zugesetzt. Nach 10- bis 15stündigem Rühren ist die Kupplung beendet. Anschliessend wird mit 28 Teilen Ameisensäure, 61 Teilen Chrom-III-hydroxid mit einem Gehalt von 32% und nach und nach mit insgesamt 40 Teilen 50%iger Natronlauge versetzt. Nach 4 bis 5 Stunden Kochzeit (100 bis 102 °C) wird auf 35 bis 40 °C abgekühlt. Es bilden sich zwei unterschiedlich intensiv schwarzgrün gefärbte Schichten, von denen die untere den Farbstoff enthält und isoliert wird. Man erhält 740 Teile Farbharz, das beispielsweise nach Zusatz von 200 Teilen Wasser eine beständige Farbstoffflüssigeinstellung ergibt, die Wolle oder Polyamid in graugrünen Tönen färbt.

Beispiel 4

44,2 Teile des Na-Salzes von 1-Amino-2-hydroxy-3,5-dinitrobenzol werden in 130 Teilen Wasser und 70 Teilen Butyldiglykol angerührt und mit 71,4 Teilen einer 20,3%igen wässrigen $NaNO_2$-Lösung versetzt. Dann lässt man bei 0 bis 5 °C rasch 108 Teile 18,3%ige Salzsäure zulaufen. Nach 3 Stunden wird überschüssiges Nitrit mit etwas Aminosulfonsäure zerstört. Die Diazolösung lässt man in eine Lösung aus 46,4 Teilen D-Säure (2-Amino-naphthalin-(5)-sulfonsäure), 90 Teilen Wasser, 37,5 Teilen Butyldiglykol und 38 Teilen 50%iger Natronlauge einlaufen, wonach sofort 14 Teile $NaHCO_3$ zugegeben werden. Nach Zusatz von 44 Teilen Na-acetat und 26 Teilen $CoCl_2 \times 6H_2O$ wird 5 bis 6 Stunden auf 60 °C erwärmt. Nach dem Abkühlen auf Raumtemperatur wird die untere viskose Phase abgetrennt. Man erhält 330 Teile Farbharz, die beispielsweise nach Verdünnen mit 80 Teilen Dimethylformamid eine beständige flüssige Farbstoffeinstellung bilden, die Wolle und Polyamid in olivgrünen Tönen färbt.

Beispiel 5

188 Teile 1-Amino-2-hydroxy-benzol-(4)-sulfonsäure werden in einem Gemisch aus 360 Teilen Butyldiglykol, 400 Teilen Wasser und 120 Teilen 30%iger Salzsäure bei 0 bis 5 °C mit 363 Teilen 20,3%iger $NaNO_2$-Lösung diazotiert. Nach 2 Stunden wird überschüssiges Nitrit zerstört, man trägt dann 188 Teile Acetessigsäureanilid ein und lässt 37,6 Teile Monomethyläthanolamin rasch zulaufen. Nach 10 bis 15 Stunden ist die Kupplung beendet. Anschliessend setzt man 136 Teile einer $Co(OH)_2$-Paste mit einem Gehalt an Co von 24,4% sowie 30 Teile 50%ige NaOH zu und erhitzt ungefähr 4 Stunden auf 80 °C. Es bildet sich ein Zweiphasengemisch, das bei Raumtemperatur getrennt wird. Man erhält als untere Phase 1100 Teile Farbharz, die beispielsweise durch Verdünnen mit 600 Teilen Dimethylformamid und 200 Teilen Butyldiglykol eine beständige Farbstoffeinstellung liefern. Sie färbt Wolle und Polyamid in gelbem Ton.

Beispiel 6

38,5 Teile 1-Amino-2-hydroxy-4-nitrobenzol und 38,5 Teile 1-Amino-2-hydroxy-5-nitrobenzol werden in 120 Teilen Äthylglykol, 80 Teilen Butylglykol, 480 Teilen Wasser und 71 Teilen 30%iger Salzsäure bei 0 bis 5 °C mit 167 Teilen 20,3%iger $NaNO_2$-Lösung diazotiert. Nach 2 Stunden wird der Nitritüberschuss zerstört. Man versetzt nun mit 90 Teilen 1-Phenyl-3-methyl-pyrazolon-(5) und 20 Teilen 50%iger Natronlauge und lässt 10 bis 15 Stunden nachrühren. Nach Zusatz von 67 Teilen Chrom-III-hydroxid-Paste mit einem Gehalt von 32% $Cr_2O_3$ und 40 Teilen Eisessig wird das Gemisch unter allmählicher Zugabe von insgesamt 65 Teilen 50%iger Natronlauge 20 bis 25 Stunden zum Sieden erhitzt. Darauf wird auf 30 bis 35 °C abgekühlt und die in zwei Phasen vorliegende Mischung getrennt. Die untere viskose Phase enthält den Farbstoff und wird abgetrennt. Man erhält 410 Teile Farbharz, das beispielsweise mit 290 Teilen Äthylglykol verdünnt eine beständige flüssige Farbstoffeinstellung liefert, die Wolle, Polyamid und Leder in roten Tönen färbt.

Äthylglykol = Äthylenglykolmonoäthyläther
Butylglykol = Äthylenglykolmonobutyläther
Butyldiglykol = Diäthylenglykolmonobutyläther

**Patentansprüche**

1. Verfahren zur Herstellung von Kobalt- und Chrom-1:2-Komplexfarbstoffen durch Diazotierung, Kupplung und Metallisierung, dadurch gekennzeichnet, dass man Diazotierung, Kupplung und Metallisierung ohne Zwischenisolierungen in einem Gemisch aus Wasser und einem Lösungsmittel der Formel I

$$HO-X_n-B \qquad I,$$

in der
X einen Rest der Formel
$-C_2H_4O-$, $-\underset{CH_3}{\underset{|}{C}}HCH_2O-$ oder $-CH_2\underset{CH_3}{\underset{|}{C}}HO-$,
n 1, 2 oder 3 und

B $C_1$- bis $C_4$-Alkyl bedeuten,
ggf. im Gemisch mit weiteren Lösungsmitteln vornimmt, wobei die Mengenverhältnisse so gewählt werden, dass nach Ablauf aller Reaktionen bezogen auf das Gesamtgewicht die Reaktionsmischung 10 bis 30% Metallkomplexfarbstoff berechnet als Salz, 10 bis 20% Lösungsmittel, 30 bis 60% Wasser und 2 bis 20% reaktionsbedingte Salze enthält.

2. Verfahren gemäss Anspruch 1, dadurch gekennzeichnet, dass man die Diazotierung mit Natriumnitrit vornimmt.

3. Verfahren gemäss Anspruch 1, dadurch gekennzeichnet, dass man als Lösungsmittel Äthylglykol, Butylglykol oder Butyldiglykol verwendet.

4. Verfahren gemäss Anspruch 1, dadurch gekennzeichnet, dass man Farbstofflösungen herstellt, die nach der Phasentrennung 30 bis 50% Farbstoff, 15 bis 35% Lösungsmittel und 15 bis 40% Wasser enthalten.

**Revendications**

1. Procédé pour la préparation de colorants complexes 1:2 de cobalt et de chrome par diazotation, copulation et métallisation, caractérisé en ce qu'on procède à la diazotation, à la copulation et à la métallisation sans isolement intermédiaire dans un mélange d'eau et d'un solvant de formule I

$$HO-X_n-B \qquad I,$$

dans laquelle
X représente un radical de formule
$-C_2H_4O-$, $-\underset{CH_3}{\underset{|}{C}}HCH_2O-$ ou $-CH_2\underset{CH_3}{\underset{|}{C}}HO-$,

n est égal à 1, 2 ou 3 et
B est un alcoyle à 1–4 atomes de carbone,
le cas échéant en mélange avec d'autres solvants, les proportions étant choisies de telle manière qu'au terme de toutes les réactions, le mélange réactionnel contienne, par rapport au poids total, 10 à 30% de colorant complexe métallique calculés en tant que sel, 10 à 20% de solvant, 30 à 60% d'eau et 2 à 20% de sels dus aux réactions.

2. Procédé selon la revendication 1, caractérisé en ce qu'on procède à la diazotation avec du nitrite de sodium.

3. Procédé selon la revendication 1, caractérisé en ce qu'on utilise, en tant que solvant, l'éthylglycol, le butylglycol ou le butyldiglycol.

4. Procédé selon la revendication 1, caractérisé en ce qu'on prépare des solutions de colorant qui contiennent, à la suite de la séparation des phases, 30 à 50% de colorant, 15 à 35% de solvant et 15 à 40% d'eau.

**Claims**

1. A process for the preparation of 1:2-cobalt and 1:2-chromium complex dyes by diazotizing, coupling and metallizing, characterized in that diazotizing, coupling and metallizing are carried out, without intermediate isolation, in a mixture of water and a solvent of the formula I

$$HO-X_n-B \qquad I$$

where
X is a radical of the formula
$-C_2H_4O-$, $-\underset{CH_3}{\underset{|}{C}}HCH_2O-$ or $-CH_2\underset{CH_3}{\underset{|}{C}}HO$

n is 1, 2 or 3 and

B is $C_1$–$C_4$-alkyl,
which may or may not be mixed with other solvents, the ratios of the amounts used being so selected that after completion of all the reactions, the reaction mixture contains, based on the total weight, from 10 to 30% of metal complex dye, calculated as the salt, from 10 to 20% of solvent, from 30 to 60% of water and from 2 to 20% of other salts present due to the reaction.

2. A process as claimed in claim 1, characterized in that the diazotization is carried out with sodium nitrite.

3. A process as claimed in claim 1, characterized

in that ethylglycol, butylglycol or butyldiglycol is used as solvent.

4. A process as claimed in claim 1, characterized in that a dye solution is prepared which, after phase separation, contains from 30 to 50% of dye, from 15 to 35% of solvent and from 15 to 40% of water.